(19) Europäisches Patentamt / European Patent Office / Office européen des brevets

(11) **EP 1 181 507 B1**

## (12) EUROPÄISCHE PATENTSCHRIFT

(45) Veröffentlichungstag und Bekanntmachung des Hinweises auf die Patenterteilung:
**19.10.2016 Patentblatt 2016/42**

(21) Anmeldenummer: **00979312.6**

(22) Anmeldetag: **11.12.2000**

(51) Int Cl.:
**G01F 13/00** *(2006.01)*  **G01G 13/02** *(2006.01)*
**G01G 13/20** *(2006.01)*

(86) Internationale Anmeldenummer:
**PCT/CH2000/000656**

(87) Internationale Veröffentlichungsnummer:
**WO 2001/048444 (05.07.2001 Gazette 2001/27)**

---

(54) **DOSIERREGELUNG FÜR SCHNECKENDOSIERGERÄT**

DOSING DEVICE FOR A WORM DOSING DEVICE

DISPOSITIF DE REGULATION POUR DOSEUR A VIS SANS FIN

---

(84) Benannte Vertragsstaaten:
**AT BE CH CY DE DK ES FI FR GB GR IE IT LI LU MC NL PT SE TR**

(30) Priorität: **01.04.2000 CH 6332000**

(43) Veröffentlichungstag der Anmeldung:
**27.02.2002 Patentblatt 2002/09**

(73) Patentinhaber: **K-TRON TECHNOLOGIES, INC.**
**Pitman, NJ 08071-0888 (US)**

(72) Erfinder: **LUDESCHER, Stefan**
**CH-4665 Oftringen (CH)**

(74) Vertreter: **Stump, Beat et al**
**Stump & Partner AG**
**Zimmergasse 16**
**8008 Zürich (CH)**

(56) Entgegenhaltungen:
**DE-A- 2 903 259    GB-A- 1 491 034**
**US-A- 5 184 754    US-A- 5 423 456**

- **VETTER G ET AL: "SCHUTTGUTMECHANISCHE AUSLEGUNG VON DOSIERDIFFERENTIALWAAGEN MIT SCHNECKENAUSTRAG" WAGEN UND DOSIEREN,DE,VERLAGSGESELLSCHAFT KEPPLER, MAINZ, Bd. 24, Nr. 4, 1. Juli 1993 (1993-07-01), Seiten 3-16, XP000434229 ISSN: 0342-5916**
- **PATENT ABSTRACTS OF JAPAN vol. 006, no. 092 (P-119), 29. Mai 1982 (1982-05-29) & JP 57 028217 A (ASANO SEIKI KK), 15. Februar 1982 (1982-02-15)**

---

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

# EP 1 181 507 B1

**Beschreibung**

Die vorliegende Erfindung betrifft eine Vorrichtung zur Dosierregelung für ein Schneckendosiergerät nach dem Oberbegriff von Patentanspruch 1 sowie ein Verfahren zum Betrieb solcher Vorrichtungen nach dem Oberbegriff von Patentanspruch 15.

Beim Fördern von Schüttgütern mittels einer Austragsschnecke kann das volumetrische Dosierprinzip oder das genauere gravimetrischen Prinzip verwendet werden. Bei letzterem wird die Masse m(t) eines Austragsgerätes, eines Vorratsbehälters sowie des darin vorhandenen Schüttguts zusammen gemessen, wobei der Massenunterschied pro Zeiteinheit, also der von der Zeit $\underline{t}$ abhängige Massenfluss m (t), laufend elektronisch erfasst wird. Der Ist-Wert wird mit einem gewünschten SollWert verglichen und durch einen bekannten Dosierregler auf den gewünschten Wert hin geregelt.

In der Praxis ist der von der Zeit $\underline{t}$ abhängige Massenfluss m(t) allerdings nicht konstant, sondern er fluktuiert periodisch mit einer Frequenz, die gleich der Drehzahl der Austragsschnecke oder einem ganzen Vielfachen davon ist. Der Dosierregler ist im allgemeinen nicht in der Lage, diese periodischen Abweichungen von einem gewünschten konstanten Wert auszugleichen.

Zusätzlich dazu besteht die weitere Schwierigkeit, dass verschiedene Austragsschnecken, aber auch verschiedene Schüttgüter, oder gleiche Schüttgüter mit leicht verschiedenen oder sich ändernden Fliessparametern, zu völlig anderen Fluktuationen des Massenflusses $\dot{m}(t)$ führen.

Die Aufgabe, die mit der vorliegenden Erfindung gelöst wird, ist es, eine Vorrichtung zur Dosierregelung für Schneckendosiergeräte sowie ein Verfahren zum Betrieb solcher Vorrichtungen zu schaffen, welche sofort und immer einsatzbereit sind, und mit welchen die oben genannten, im Massenfluss m (t) solcher Vorrichtungen auftretenden periodischen Fluktuationen, unabhängig von den Eigenschaften der verwendeten Austragsschnecke und unabhängig von den Eigenschaften verschiedener Schüttgüter, im Wesentlichen eliminiert werden können.

Die Lösung dieser Aufgabe ist wiedergegeben im kennzeichnenden Teil von Patentanspruch 1 hinsichtlich der Vorrichtung, im kennzeichnenden Teil von Patentanspruch 15 hinsichtlich des entsprechenden Verfahrens, und in den übrigen Patentansprüchen betreffend spezieller Ausgestaltungen der Vorrichtung respektive des Verfahrens.

Die Erfindung wird anhand der folgenden Figuren weiter erläutert. Es zeigen:

Fig. 1    das Prinzipschema eines Schneckendosiergerätes nach bekanntem Stand der Technik,
Fig. 2    eine Darstellung eines Stellsignals s(t) zum Drehzahlregler und des resultierenden Massenflusses m(t) bei einem Schneckendosiergerät nach bekanntem Stand der Technik,
Fig. 3    das Prinzipschema einer erfindungsgemässen Vorrichtung zur Dosierregelung für ein Schneckendosiergerät mit einem Modulationsdetektor und einem Drehzahlmodulator,
Fig. 4    das Blockschaltbild eines erfindungsgemässen Modulationsdetektors,
Fig. 5    das Blockschaltbild eines erfindungsgemässen Drehzahlmodulators,
Fig. 6    eine Darstellung des erfindungsgemäss modulierten Stellsignals $s_{mod}(t)$ und des resultierenden Massenflusses $\dot{m}(t)$.

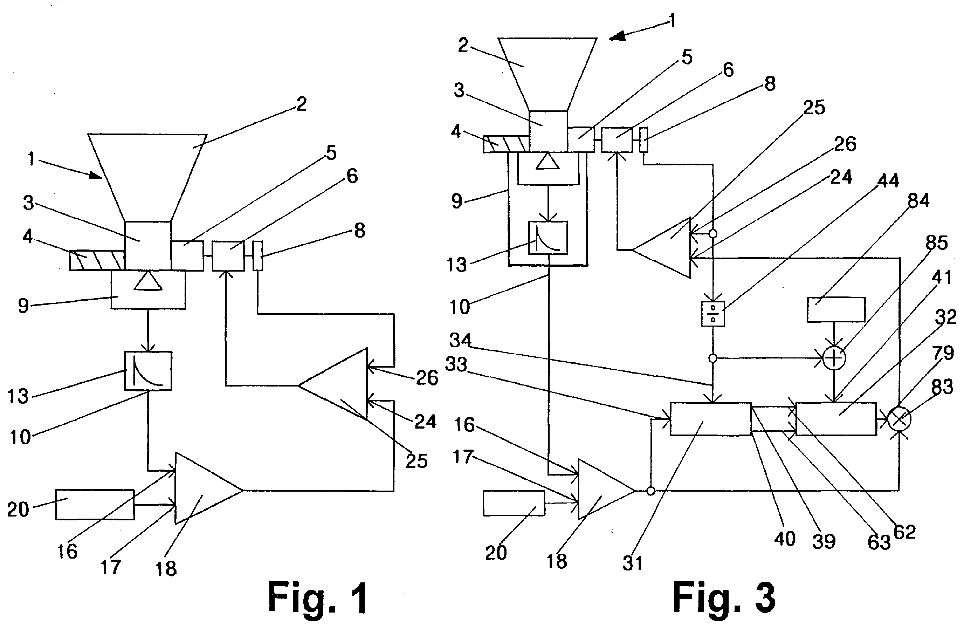

Fig. 1 zeigt das Prinzipschema eines Schneckendosiergerätes 1 nach bekanntem Stand der Technik. Es weist einen mit Schüttgut gefüllten Vorratsbehälter 2 auf, aus welchem das Schüttgut über eine Führung 3 auf eine Austragsschnecke 4 fällt. Diese Austragsschnecke 4 ist, in der Regel über ein Getriebe 5, mit einem Elektromotor 6 verbunden. Weiter sind Winkelmessmittel vorhanden, mit welchen die Winkellage der Austragsschnecke 4 bestimmt werden kann. Solche Mittel sind bekannt und enthalten beispielsweise Codierscheiben oder Inkrementalgeber, welche mit einer geeigneten Achse verbunden sind. Hier ist, als Beispiel, ein Inkrementalgeber 8 dargestellt, der mit der Achse des Elektromotors 6 verbunden ist. Das gesamte Schneckendosiergerät 1 befindet sich auf einer an sich bekannten elektronischen Waage 9. Mit der Waage 9 wird die Summe der Massen des Schneckendosiergerätes 1 und des darin enthaltenen Schüttgutes gemessen. Das entsprechende Massensignal wird in bekannter Weise einem Eingang eines elektronischen Differentiators 13 zugeleitet. Dieser enthält einen Ausgang 10, der nun ein Signal ausgibt, welches dem Massenfluss m (t) entspricht. Dieser Ausgang 10 ist mit einem ersten Eingang 16 eines Massenstromreglers 18 verbunden. Ein Sollwertgeber 20 erzeugt an seinem Ausgang ein erstes Sollwertsignal. Dessen Ausgang ist mit einem zweiten Eingang 17 des Massenstromreglers 18 verbunden, welcher an seinem Ausgang ein Stellsignal s(t) erzeugt, das im Wesentlichen um die Differenz zwischen dem Massenflussignal des Differentiators 13 und dem Signal des Sollwertgebers 20 korrigiert ist. Der Ausgang des Massenstromreglers 18 ist mit einem ersten Eingang 24 eines Drehzahlreglers 25 verbunden. Der oben genannte Inkrementalgeber 8 erzeugt ein Drehzahlsignal, welches an einem zweiten Eingang 26 des Drehzahlreglers 25 liegt. Dieser erzeugt an seinem Ausgang ein Differenzsignal, welches im Wesentlichen der Differenz zwischen dem Stellsignal s(t) des Massenstromreglers 18 und dem Drehzahlsignal des Inkrementalgebers 8 entspricht. Der Ausgang des Drehzahlreglers 25 ist mit dem Eingang des Elektromotors 6 verbunden, wodurch die Drehgeschwindigkeit des Elektromotors 6 entsprechend dem gewünschten Sollwert des Massenflusses m (t) angepasst wird.

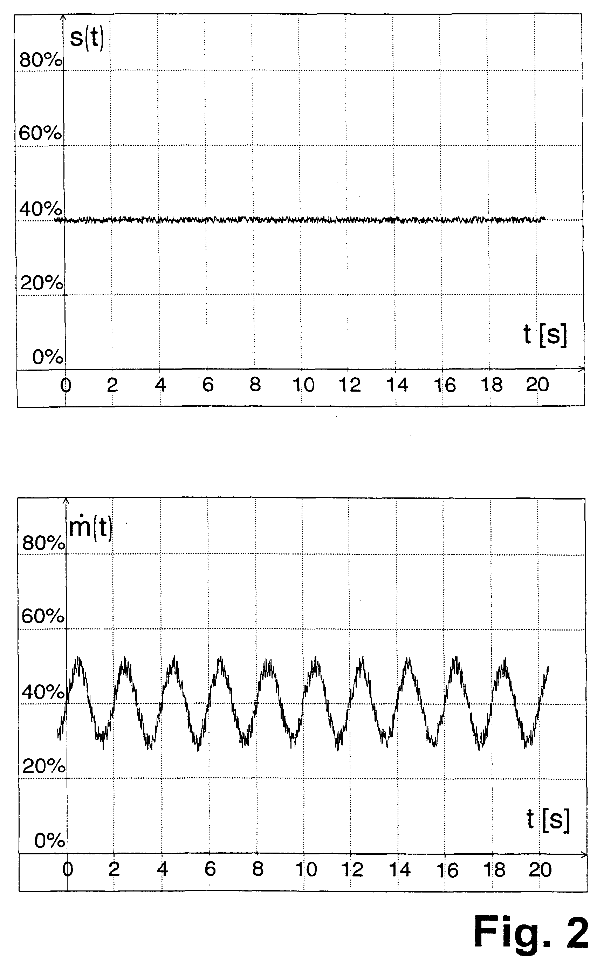

Fig. 2 zeigt den zeitlichen Verlauf des im Wesentlichen konstanten Stellsignals s(t) am ersten Eingang 24 des Drehzahlreglers 25, sowie den daraus resultierenden zeitlichen Verlauf des Massenflusses m (t) bei einem Schneckendosiergerät 1 nach bekanntem Stand der Technik. Die als Beispiel gewählte Drehzahl der Austragsschnecke 4 beträgt hier eine halbe Umdrehung pro Sekunde, was eine Periodendauer T von zwei Sekunden ergibt. Das Stellsignal s(t) des Massenstromreglers 18 weist in diesem Beispiel einen Wert von 40% seines Maximalwertes auf. Der daraus resultierende Massenfluss m (t) - ebenfalls als Bruchteil seines Maximalwertes angegeben - zeigt einen periodischen Verlauf mit einer Periode T, welcher von zufälligen, aperiodischen Störungen überlagert ist. Erfahrungsgemäss liegt der Hauptanteil der periodischen Störung in der Grundfrequenz $\underline{f}$ = 2π/T. Die Anteile der Oberfrequenzen $\underline{2f}$, $\underline{3f}$, ... sind praktisch meist vernachlässigbar. Der Massenfluss m(t) kann, abgesehen von den zufälligen Störungen, mathematisch wie folgt be-schrieben werden:

$$\dot{m}(t) = A + S1\ \sin(1\cdot 2\pi f\cdot t) + C1\ \cos(1\cdot 2\pi f\cdot t)$$
$$+ S2\ \sin(2\cdot 2\pi f\cdot t) + C2\ \cos(2\cdot 2\pi f\cdot t)$$
$$+ S3\ \sin(3\cdot 2\pi f\cdot t) + C3\ \cos(3\cdot 2\pi f\cdot t)$$
$$+ \ldots,$$

wobei A, S1, C1, S2, C2, ... Konstanten sind, welche die Bedingungen $A^2 >> S1^2+C1^2 >> S2^2+C2^2 >> \ldots$ erfüllen. Die Abtastfrequenz der Waage 9 ist dabei immer viel grösser als die Drehzahl der Austragsschnecke 4.

Fig. 3 zeigt das Prinzipschema einer erfindungsgemässen Vorrichtung zur Dosierregelung für ein Schneckendosiergerät 1. Sie enthält, neben den bereits unter Fig. 1 beschriebenen und bekannten Mitteln, zusätzlich einen Modulationsdetektor 31, mit welchem die periodischen Abweichungen eines für den Massenfluss m(t) charakteristischen Signals von einem Sollwert quantitativ analysiert werden können, und einen Drehzahlmodulator 32, mit welchem aus den durch den Modulationsdetektor 31 gefundenen quantitativen Werten ein geeignetes Modulationssignal erzeugt werden kann, mit dem das Stellsignal s(t) und damit die Drehzahl der Austragsschnecke 4, entsprechend der durch den Modulationsdetektor 31 ermittelten Kurvenform des Massenflusses m (t), moduliert wird. Die Modulation des Stellsignals s(t) geschieht in einem ersten Verarbeitungsglied 83, welches einen ersten und einen zweiten Eingang aufweist: Ein Ausgang 79 des Drehzahlmodulators 32, welcher das Modulationssignal trägt, ist mit dem ersten Eingang, der Ausgang des Massenstromreglers 18, welcher das Stellsignal s(t) trägt, mit dem zweiten Eingang des Verarbeitungsgliedes 83 verbunden. Die an seinen beiden Eingängen anliegenden Signale werden in diesem in geeigneter Weise, beispielsweise durch Mischung oder durch einfache Multiplikation, zu einem einzigen Signal $s_{mod}(t)$ verarbeitet. Dieses Signal $s_{mod}(t)$ liegt auf einem Ausgang des Verarbeitungsgliedes 83, welcher mit dem Eingang 24 des Drehzahlreglers 25 verbunden ist.

Im Folgenden wird je eine beispielhafte technische Realisierung eines Modulationsdetektors 31 und eines Drehzahlmodulators 32 vorgestellt.

Der Modulationsdetektor 31 enthält einen ersten Eingang 33, welcher mit dem Ausgang des Massenstromreglers 18 verbunden ist, wodurch dieser Eingang indirekt mit der Waage 9 verbunden ist, und einen zweiten Eingang 34, welcher, in der Regel über ein Teilerglied 44, mit dem Ausgang der Winkelmessmittel verbunden ist, hier beispielsweise mit dem Ausgang eines Inkrementalgebers 8. In einer Variante kann der erste Eingang 33 statt indirekt über den Massenstromregler 18 direkt mit dem Ausgang 10 der Waage 9 verbunden sein, wie dies durch die gestrichelte Verbindungslinie angedeutet ist. Die dadurch nötigen Anpassungen in den Details der Schaltung sind dem Fachmann bekannt, weshalb darauf hier nicht weiter eingegangen werden soll. An diesem ersten Eingang 33 liegt also in beiden Fällen ein für den Massenfluss m (t) charakteristisches Signal, welches die Information über die Abweichung des Massenflusses m(t) von seinem Sollwert enthält, also entweder das Stellsignal s(t) des Massenstromreglers 18 oder das Signal am Ausgang 10 der Waage 9, welches im Folgenden unter dem Begriff Stellsignal s(t) immer mitgemeint ist.

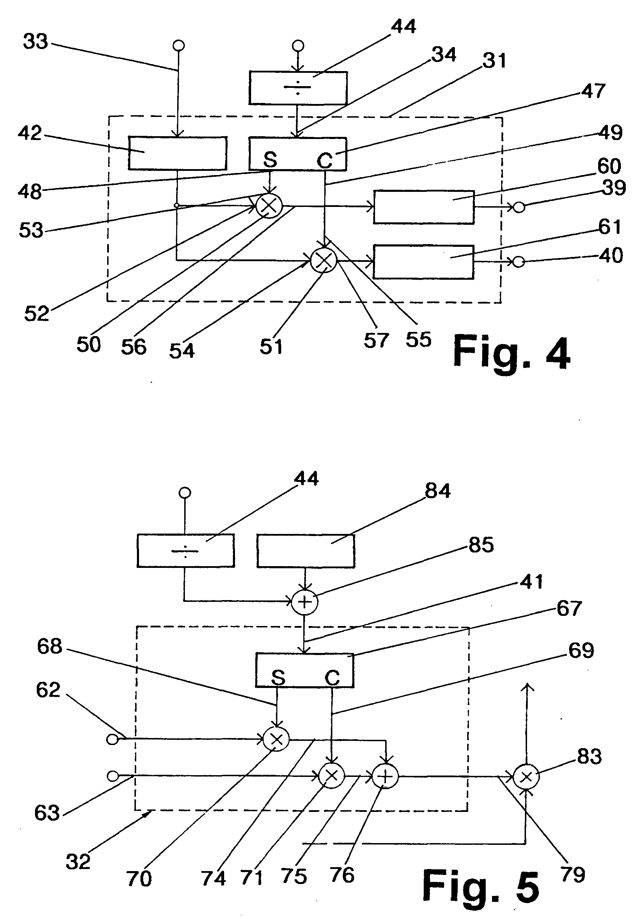

Der Modulationsdetektor 31 weist einen Ausgang 39 und einen Ausgang 40 auf, welche mit entsprechenden Eingängen 62 respektive 63 des Drehzahlmodulators 32 verbunden sind. Der Drehzahlmodulator 32 enthält weiter einen Drehzahlsignaleingang 41. An diesem Eingang 41 liegt ein Signal an, welches in einem weiteren Verarbeitungsglied 85 aus den Signalen des Teilerglieds 44 und eines bekannten Phasenkorrekturgliedes 84 gebildet wird, beispielsweise durch Mischung. In einer einfachsten Variante kann dieses Verarbeitungsglied 85 ein einfaches Additionsglied sein. Auf die Funktion des Phasenkorrekturgliedes 84 wird bei der Beschreibung von Fig. 5 weiter eingegangen.

Fig. 4 zeigt das Blockschaltbild eines erfindungsgemässen Modulationsdetektors 31 bei Verwendung eines Inkrementalgebers 8 als Winkelmessmittel, was in der Regel auch den Einsatz eines Teilergliedes 44 nötig macht. Das für den Massenfluss m (t) charakteristische Signal, also das Stellsignal s(t), worunter auch das Signal am Ausgang 10 der Waage 9 mitgemeint ist, liegt am ersten Eingang 33 des Modulationsdetektors 31. Dieses Stellsignal s(t) wird zunächst einem dem Fachmann bekannten Mittelwertabweichungsglied 42 zugeführt, mit welchem die Abweichung des Massenflusses m (t) von seinem Mittelwert bestimmt werden kann. Das Teilerglied 44 teilt die Frequenz des an ihm anliegenden Signals des Inkrementalgebers 8 durch eine geeignete Zahl, in der Regel durch die Anzahl der sich pro Umdrehung der Austragsschnecke 4 ergebenden Pulse des Inkrementalgebers 8, und übergibt diese Grundfrequenz $\underline{f}$ an einem zweiten Eingang 34 des Modulationsdetektors 31 als Drehzahlsignal an diesen weiter. Der Modulationsdetektor 31 enthält einen ersten Winkelfunktionsgenerator 47, an dessen Eingang dieses Drehzahlsignal anliegt. Der Winkelfunktionsgenerator 47 weist einen S-Ausgang 48 und einen C-Ausgang 49 auf, an welchen im Wesentlichen ein Sinus- respektive ein Cosinus-Signal mit der Grundfrequenz $\underline{f}$ abgegeben werden. Der Modulationsdetektor 31 enthält weiter zwei Multiplikationsglieder 50, 51, welche je zwei Faktoreingänge 52, 53 respektive 54, 55 und je einen Produktausgang 56 beziehungsweise 57 aufweisen. Der erste Faktoreingang 53 des ersten Multiplikationsgliedes 50 ist mit dem S-Ausgang 48 verbunden, sein zweiter Faktoreingang 52 mit dem Ausgang des Mittelwertabweichungsgliedes 42. In entsprechender Weise ist der erste Faktoreingang 55 des zweiten Multiplikationsgliedes 51 mit dem C-Ausgang 49 verbunden, sein zweiter Faktoreingang 54 ebenfalls mit dem Ausgang des Mittelwertabweichungsgliedes 42. Am Produktausgang 56 des ersten Multiplikationsgliedes 50 liegt damit im Wesentlichen ein Produkt aus dem Massenfluss m (t) und einer Sinus-Funktion mit der Periode T, am Produktausgang 57 ein Produkt aus dem Massenfluss m (t) und einer Cosinus-Funktion mit gleicher Periode T. Jeder der Produktausgänge 56, 57 ist je mit einem Eingang eines Integrators 60, 61 verbunden, welche diese Signale je über die Zeit T integrieren und diese Integralwerte an ihren Ausgängen 39, 40 bereitstellen. Am Ausgang 39 liegt damit im Wesentlichen der Wert von

$$S1 \; = \; \frac{1}{T}\int_0^T \dot{m}(t)\cdot\sin(2\pi f\cdot t)dt \quad,$$

und am Ausgang 40 entsprechend im Wesentlichen der Wert von

$$C1 \; = \; \frac{1}{T}\int_0^T \dot{m}(t)\cdot\cos(2\pi f\cdot t)dt \quad,$$

also der Wert der beiden Fourier-Koeffizienten S1, C1 in der Entwicklung der periodischen Funktion m (t) als Summe von einer konstanten Funktion und Sinus- und Cosinus-Funktionen geeigneter Amplitude und der Grundfrequenz $\underline{f}$.

Fig. 5 zeigt das Blockschaltbild eines erfindungsgemässen Drehzahlmodulators 32, ebenfalls angepasst an das Beispiel der Verwendung eines Inkrementalgebers 8 als Winkelmessmittel. Am Drehzahlsignaleingang 41 des Drehzahlmodulators 32 liegt das Ausgangssignal des bereits bei der Beschreibung von Fig. 3 dargelegten Verarbeitungsgliedes 85. Dieser Drehzahlsignaleingang 41 ist mit dem Eingang eines zweiten Winkelfunktionsgenerators 67 verbunden. Dieser weist einen S-Ausgang 68 und einen C-Ausgang 69 auf, an welchen im Wesentlichen ein Sinus- respektive ein Cosinus-Signal mit der Grundfrequenz $\underline{f}$ erzeugt werden. Mit Hilfe des bereits erwähnten Phasenkorrekturgliedes 84 kann die Phasenlage der vom Winkelfunktionsgenerator 67 ausgegebenen Winkelfunktionen zusätzlich beliebig verschoben werden, was wegen der verzögerten Systemantwortzeiten nützlich sein kann. Der Drehzahlmodulator 32 weist zwei weitere Eingänge 62 respektive 63 auf, welche mit den Ausgängen 39 respektive 40 des bereits vorgestellten Modulationsdetektors 31 verbunden sind. Er enthält weiter zwei Multiplikationsglieder 70 und 71, welche je zwei Faktoreingänge und je einen Produktausgang 74 respektive 75 aufweisen. Jeder der Eingänge 62, 63 ist je mit einem der beiden Faktoreingänge von jeweils einem dieser Multiplikationsglieder 70 respektive 71 verbunden, während der jeweils andere Faktoreingang mit dem S-Ausgang 68 respektive mit dem C-Ausgang 69 des zweiten Winkelfunktionsgenerators 67 verbunden ist. Im ersten Multiplikationsglied 70 wird somit das Produkt des Signals am S-Ausgang 68 und dem Signal am Ausgang 39, im zweiten Multiplikationsglied 71 das Produkt des Signals am C-Ausgang 69 und dem Signal am Ausgang 40 des Modulationsdetektors 31 gebildet. Der Drehzahlmodulator 32 enthält weiter ein Additionsglied 76, mit welchem die Signale an den Produktausgängen 74, 75 addiert werden können. Diese Summe stellt damit eine passend phasenverschobene Näherungsfunktion für die Abweichung des Massenstroms m(t) von einem Mittelwert dar. Der Ausgang 79 des Additionsgliedes 76 ist, wie in der Beschreibung von Fig. 3 bereits dargelegt wurde, mit einem der Eingänge des Verarbeitungsgliedes 83 verbunden. Am Ausgang des Verarbeitungsgliedes 83 liegt damit ein zum Massenfluss m(t) phasenverschobenes, mit einer Sinus-Funktion der Frequenz $\underline{f}$ mit passender Amplitude und Phasenlage überlagertes Signal des Massenstromreglers 18, welches als moduliertes Stellsignal $s_{mod}(t)$ dem ersten Eingang 24 des Drehzahlreglers 25 zugeführt werden kann.

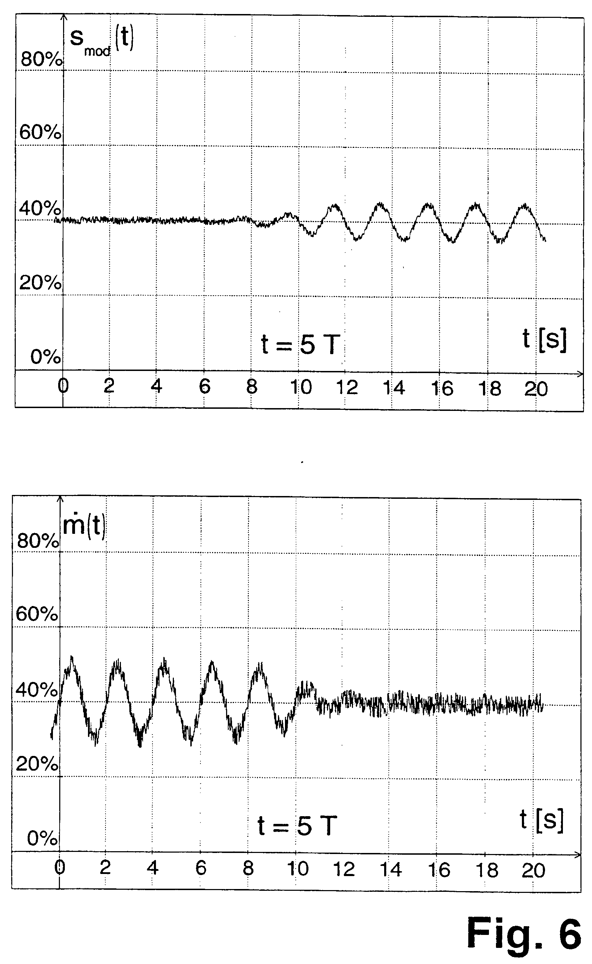

Fig. 6 zeigt den zeitlichen Verlauf des modulierten Stellsignals $s_{mod}(t)$ am ersten Eingang 24 des Drehzahlreglers 25, sowie den resultierenden Massenfluss m (t) bei einem erfindungsgemässem Schneckendosiergerät 1. Die Drehzahl der Austragsschnecke 4 beträgt hier, wie beim Beispiel in Fig. 2, ebenfalls eine halbe Umdrehung pro Sekunde. Das Stellsignal s(t) weist hier beispielsweise während der Zeit t < 5T einen im Wesentlichen konstanten, typischen Wert von 40% seines Maximalwertes auf. Dies ergibt wieder den bei Fig. 2 bereits beschriebenen periodisch fluktuierenden Massenfluss m (t), welcher ebenfalls als Bruchteil seines Maximalwertes angegeben ist. Zur Zeit t = 5T wird die erfindungsgemässe phasenverschobene Modulation des Stellsignals s(t) am ersten Eingang 24 des Drehzahlreglers 25 wirksam. Die Schwankungen des Massenflusses m (t) werden für t > 5T auf die nicht vermeidbaren zufälligen Schwankungen reduziert, während die periodischen Anteile des Massenflusses m (t) für t > 5T praktisch vollständig eliminiert werden können.

Bei genügender zeitlicher Auflösung des Massenflusses m (t) durch die Waage 9 ist es selbstverständlich ebenfalls erfindungsgemäss, dass in analoger Weise noch weitere Koeffizienten der Fourier-Entwicklung, also beispielsweise zusätzlich noch S2, C2; S3, C3; ... bestimmt werden und die Drehzahl entsprechend moduliert wird. Dies ist für den Fachmann naheliegend, weshalb hier auf eine detaillierte Beschreibung verzichtet werden kann. Die Anzahl der Oberfrequenzen, welche ausgeglichen werden können, ist begrenzt durch die Abtastfrequenz der Waage 9 und das bekannte mathematische Abtast-Theorem.

Selbstverständlich ebenfalls erfindungsgemäss ist es, einzelne oder alle der notwendigen mathematischen Operationen durch den Einsatz eines oder mehrerer integrierter Analog-Schaltungselemente, durch den Einsatz eines oder mehrerer integrierter Digital-Schaltungselemente oder durch den Einsatz eines programmierbaren Digitalrechners zu realisieren.

In anderen Ausführungsformen der erfindungsgemässen Vorrichtung werden einerseits durch den Modulationsdetektor 31 nur spezielle Werte, beispielsweise die Extremwerte, des Massenflusses m(t) bestimmt; andererseits können beliebige andere Modulationsfunktionen fest vorgegeben sein, und anstatt aus einer Summe von Sinus- und Cosinus-Funktion beispielsweise aus einer geeigneten Ueberlagerung von quadratischen Funktionen bestehen, im einfachsten Fall beispielsweise aus je einem nach unten respektive nach oben geöffneten Parabelstück, wodurch sich die Vorrichtung respektive das Verfahren vereinfacht, periodische Schwankungen des Massenflusses m(t) aber dennoch zufriedenstellend eliminiert werden können.

Ebenfalls erfindungsgemäss ist es, diese Vorrichtung respektive dieses Verfahren mit bekannten Mitteln respektive mit bekannten Verfahren, insbesondere mit in geeigneten Zeitabständen durchgeführten Eichmessungen über eine oder mehrere Perioden T, zu kombinieren. Dies kann beispielsweise so geschehen, dass das erfindungsgemässe Vorgehen zur Eliminierung von Schwankungen mit der Grundfrequenz $\underline{f}$ angewendet wird, also die periodischen Abweichungen des Massenflusses m (t) von einem Sollwert mit der Grundfrequenz $\underline{f}$ mit einem Modulationsdetektor 31 laufend analysiert werden und für diese Abweichungen eine Näherungsfunktion ermittelt wird, während die Amplituden der Schwankungen mit höheren Frequenzen $2\underline{f}$, $3\underline{f}$, ..., aus der jeweils letzten Eichmessung bestimmt werden. Die Drehzahl der Austragsschnecke 4 wird dann, entsprechend einer Kombination aus der ermittelten Näherungsfunktion für die Grundfrequenz $\underline{f}$ und den Amplituden für die Abweichungen höherer Frequenz, mit einem Drehzahlmodulator 32 ebenfalls so moduliert, dass die Schwankungen des Massenflusses m(t) auf die nicht vermeidbaren zufälligen Schwankungen reduziert und die periodischen Schwankungen des Massenflusses m (t) eliminiert werden.

## Patentansprüche

1. Vorrichtung zur Dosierregelung des Massenflusses m (t) für ein Schneckendosiergerät (1) mit einem Vorratsbehälter (2) für Schüttgut, einem Elektromotor (6), einer mit diesem gekoppelten Austragsschnecke (4), Winkelmessmitteln zur Bestimmung der Winkellage der Austragsschnecke (4), einer Waage (9), welche die Masse des Schneckendosiergerätes (1) sowie des darin enthaltenen Schüttgutes laufend misst, einem mit einem Ausgang (10) der Waage (9) verbundenen Massenstromregler (18) und einem mit dem Motor (6) verbundenen Drehzahlregler (25), **dadurch gekennzeichnet, dass**

   - ein Modulationsdetektor (31) vorhanden und mit dem Ausgang (10) der Waage (9) und mit den Winkelmessmitteln verbunden ist, mit welchem die periodischen Abweichungen eines für den Massenfluss m(t) charakteristischen Signals von einem Sollwert quantitativ analysiert werden können,
   - ein Drehzahlmodulator (32) vorhanden und mit den Winkelmessmitteln und dem Modulationsdetektor (31) verbunden ist, mit welchem aus den durch den Modulationsdetektor (31) gefundenen quantitativen Werten ein geeignetes Modulationssignal erzeugt werden kann,
   - ein Verarbeitungsglied (83) vorhanden und mit dem Drehzahlmodulator (32) und dem Massenstromregler (18) verbunden ist, mit welchem dieses Modulationssignal und das für den Massenfluss m (t) charakteristische Signal zu einem modulierten Stellsignal $s_{mod}(t)$ verarbeitet werden kann,
   - der Drehzahlregler (25) mit einem Ausgang des Verarbeitungsgliedes (83) verbunden ist und mit diesem modulierten Stellsignal $s_{mod}(t)$ die Drehzahl der Austragsschnecke (4) entsprechend der durch den Modulationsdetektor (31) ermittelten Kurvenform moduliert werden kann.

2. Vorrichtung nach Patentanspruch 1, **dadurch gekennzeichnet, dass** die Winkelmessmittel einen mit einer geeigneten Achse verbundenen Inkrementalgeber (8) enthalten.

3. Vorrichtung nach einem der Patentansprüche 1 oder 2, **dadurch gekennzeichnet, dass**

- ein Ausgang (10) der Waage (9) indirekt über den Massenstromregler (18) mit dem Modulationsdetektor (31) verbunden ist,
- das für den Massenfluss m (t) charakteristische Signal ein Stellsignal s(t) am Ausgang des Massenstromreglers (18) ist.

4. Vorrichtung nach einem der Patentansprüche 1 oder 2, **dadurch gekennzeichnet, dass**

- ein Ausgang (10) der Waage (9) direkt mit dem Modulationsdetektor (31) verbunden ist,
- das für den Massenfluss m(t) charakteristische Signal ein Signal am Ausgang (10) der Waage (9) ist.

5. Vorrichtung nach einem der Patentansprüche 2 bis 4, **dadurch gekennzeichnet, dass**

- ein Teilerglied (44) vorhanden ist,
- der Inkrementalgeber (8) mit diesem Teilerglied (44) verbunden ist,
- dieses Teilerglied (44) die Frequenz eines vom Inkrementalgeber (8) erzeugten Signals durch eine geeignete Zahl teilt,
- der Inkrementalgeber (8) indirekt über das Teilerglied (44) mit dem Modulationsdetektor (31) verbunden ist.

6. Vorrichtung nach einem der Patentansprüche 2 bis 4, **dadurch gekennzeichnet, dass**

- ein Teilerglied (44) vorhanden ist,
- der Inkrementalgeber (8) mit diesem Teilerglied (44) verbunden ist,
- dieses Teilerglied (44) die Frequenz eines vom Inkrementalgeber (8) erzeugten Signals durch eine geeignete Zahl teilt,
- der Inkrementalgeber (8) indirekt über das Teilerglied (44) mit dem Drehzahlmodulator (32) verbunden ist.

7. Vorrichtung nach einem der Patentansprüche 1 bis 6, **dadurch gekennzeichnet, dass**

- der Modulationsdetektor (31) untereinander geeignet verbundene

- Mittel (42) enthält, mit welchen die periodischen Mittelwertabweichungen des Massenflusses m(t) von einem Sollwert bestimmt werden können,
- Mittel (47) zur Erzeugung je eines Sinus- und eines Cosinus-Signals der Grundfrequenz f enthält,
- Multiplikationsmittel (50, 51) enthält, mit welchen die Produkte aus dem Massenfluss m (t) und dem Sinus-Signal und aus dem Massenfluss m (t) und dem Cosinus-Signal bestimmt werden können,
- Integrationsmittel (60, 61) enthält, mit welchen je die zeitlichen Mittelwerte dieser Produkte bestimmt werden können.

8. Vorrichtung nach Patentanspruch 7, **dadurch gekennzeichnet, dass** im Modulationsdetektor (31)

- zusätzlich Mittel zur Erzeugung von Sinus- und Cosinus-Signalen mit einem natürlichen Vielfachen der Grundfrequenz f vorhanden sind,
- zusätzlich Mittel zur Bestimmung von zeitlichen Mittelwerten der Produkte aus dem Massenfluss m (t) und diesen Sinus- respektive Cosinus-Signalen vorhanden sind.

9. Vorrichtung nach einem der Patentansprüche 1 bis 6, **dadurch gekennzeichnet, dass**

- der Drehzahlmodulator (32) untereinander geeignet verbundene

- Mittel (67) zur Erzeugung je eines Sinus- und eines Cosinus-Signals der Grundfrequenz f enthält,
- Multiplikationsmittel (70, 71) aufweist, mit welchen diese Sinus- respektive Cosinus-Signale mit den entsprechenden Ausgangssignalen des Modulationsdetektors (31) multipliziert werden können,
- Additionsmittel (76) aufweist, mit welchen diese Produkte zu einer Summe addiert werden können,

- der Drehzahlmodulator (32) einen Ausgang (79) aufweist, an welchem im Wesentlichen ein Modulationssignal liegt, welches dieser oben genannten Summe entspricht,
- dieser Ausgang (79) mit einem Eingang des Verarbeitungsgliedes (83) verbunden ist.

**10.** Vorrichtung nach Patentanspruch 9, **dadurch gekennzeichnet, dass** im Drehzahlmodulator (32)

- zusätzlich Mittel zur Erzeugung von Sinus- und Cosinus-Signalen mit einem natürlichen Vielfachen der Grundfrequenz f vorhanden sind,
- zusätzlich Mittel zur Bestimmung von zeitlichen Mittelwerten der Produkte aus dem Massenfluss m (t) und diesen Sinus- respektive Cosinus-Signalen vorhanden sind.

**11.** Vorrichtung nach Patentanspruch 9, **dadurch gekennzeichnet, dass**

- ein Teilerglied (44) vorhanden ist,
- der Inkrementalgeber (8) mit diesem Teilerglied (44) verbunden ist,
- dieses Teilerglied (44) die Frequenz eines vom Inkrementalgeber (8) erzeugten Signals durch eine geeignete Zahl teilt,
- ein Phasenkorrekturglied (84) vorhanden ist,
- ein Verarbeitungsglied (85) mit zwei Eingängen vorhanden ist,
- das Teilerglied (44) und das Phasenkorrekturglied (84) mit je einem Eingang dieses Verarbeitungsgliedes (85) verbunden sind,
- der Ausgang des Verarbeitungsgliedes (85) mit dem Drehzahlsignaleingang (41) des Drehzahlmodulators (32) verbunden ist,

wodurch die Phasenlagen der vom Winkelfunktionsgenerator (67) des Drehzahlmodulators (32) erzeugten Winkelfunktionen beliebig vorgegeben werden können.

**12.** Vorrichtung nach einem der Patentansprüche 1 bis 11, **dadurch gekennzeichnet, dass** zur Realisierung von mindestens einer der mathematischen Operationen in der Vorrichtung ein integriertes Analog-Schaltungselement eingesetzt wird.

**13.** Vorrichtung nach einem der Patentansprüche 1 bis 11, **dadurch gekennzeichnet, dass** zur Realisierung von mindestens einer der mathematischen Operationen in der Vorrichtung ein integriertes Digital-Schaltungselement eingesetzt wird.

**14.** Vorrichtung nach einem der Patentansprüche 1 bis 11, **dadurch gekennzeichnet, dass**

- ein Digitalrechner vorhanden und geeignet mit der Vorrichtung verbunden ist,
- dieser Digitalrechner zur Realisierung von mindestens einer der mathematischen Operationen in der Vorrichtung eingesetzt wird.

**15.** Verfahren zum Betrieb einer Vorrichtung zur Dosierregelung des Massenflusses m (t) für ein Schneckendosiergerät (1) mit einem Vorratsbehälter (2) für Schüttgut, einem Elektromotor (6), einer mit diesem gekoppelten Austragsschnecke (4), einer Waage (9), welche die Masse des Schneckendosiergerätes (1) sowie des darin noch enthaltenen Schüttgutes laufend misst, einem mit einem Ausgang (10) der Waage (9) verbundenen Massenstromregler (18) und einem mit dem Motor (6) verbundenen Drehzahlregler (25), **dadurch gekennzeichnet, dass**

- die periodischen Abweichungen des Massenflusses $\dot{m}(t)$ von einem Sollwert mit einem Modulationsdetektor (31) laufend analysiert werden,
- für diese Abweichungen eine Näherungsfunktion ermittelt wird,
- die Drehzahl der Austragsschnecke (4), entsprechend der ermittelten Näherungsfunktion, mit einem Drehzahlmodulator (32) so moduliert wird, dass die Schwankungen des Massenflusses m (t) auf die nicht vermeidbaren zufälligen Schwankungen reduziert und die periodischen Schwankungen des Massenflusses m (t) eliminiert werden.

**16.** Verfahren nach Patentanspruch 15, **dadurch gekennzeichnet, dass**

- der Massenfluss m (t) laufend mit einer Abtastfrequenz bestimmt wird, die gross ist gegenüber der Grundfrequenz $f$,
- die Koeffizienten mindestens der Grundfrequenz $f$ in der Fourier-Entwicklung des Massenfluss m (t) bestimmt werden,
- diese Koeffizienten zeitlich gemittelt werden und daraus eine Näherungsfunktion für die zeitliche Abweichung des Massenflusses m (t) von einem Mittelwert berechnet wird,
- die Drehzahl der Austragsschnecke (4) entsprechend dem jeweiligen Wert dieser Näherungsfunktion moduliert wird.

17. Verfahren nach einem der Patentansprüche 15 oder 16, **dadurch gekennzeichnet, dass** zur Bestimmung der Näherungsfunktion für die zeitliche Abweichung des Massenflusses m (t) von einem Mittelwert die Extremwerte der Abweichung des Massenflusses m (t) von seinem Sollwert verwendet werden.

18. Verfahren nach einem der Patentansprüche 15 bis 17, **dadurch gekennzeichnet, dass** für die Näherungsfunktion eine Ueberlagerung von höchstens quadratischen Funktionen verwendet wird.

19. Verfahren nach Patentanspruch 15, **dadurch gekennzeichnet, dass**

- die periodischen Abweichungen des Massenflusses m (t) von einem Sollwert mit der Grundfrequenz $f$ mit einem Modulationsdetektor (31) laufend analysiert werden,
- für diese Abweichungen eine Näherungsfunktion ermittelt wird,
- in geeigneten Zeitintervallen eine Eichmessung über mindestens eine Periode T durchgeführt wird,
- Amplituden der periodischen Abweichungen des Massenflusses m (t) von einem Sollwert mit höherer Frequenz als der Grundfrequenz $f$ aus dieser Eichmessung bestimmt werden,
- die Drehzahl der Austragsschnecke (4), entsprechend einer Kombination aus der ermittelten Näherungsfunktion für die Grundfrequenz $f$ und den Amplituden für die Abweichungen höherer Frequenz, mit einem Drehzahlmodulator (32) moduliert wird, so dass die Schwankungen des Massenflusses m (t) auf die nicht vermeidbaren zufälligen Schwankungen reduziert und die periodischen Schwankungen des Massenflusses m (t) eliminiert werden.

## Claims

1. A device for dosing control of the mass flow m(t) for a helical dosing equipment (1) with a supply container (2) for bulk material, an electric motor (6), an extraction helix (4) coupled to it, angle measuring means for determining the angular position of the extraction helix (4), a weighing machine (9) which continuously measures the weight of the helical dosing equipment (1) together with the bulk material contained in it, a mass flow controller (18) connected to an output (10) of the weighing machine (9) and a rotational speed regulator (25) connected to the motor (6), **characterised in that**

- a modulation detector (31) is present and is connected to the angle measuring means, with which the periodic deviations of a characteristic signal from a target value can be analysed quantitatively,
- a rotational speed modulator (32) is present and is connected to the angle measuring means and the modulation detector (31), with which a suitable modulation signal can be generated from the quantitative values found by the modulation detector (31),
- a processing element (83) is present and is connected to the rotational speed modulator (32) and the mass flow controller (18), with which this modulation signal and the characteristic signal for the mass flow $\dot{m}$(t) can be processed into a modulated position signal $s_{mod}$(t),
- the rotational speed regulator (25) is connected to an output of the processing element (83) and with this modulated position signal $s_{mod}$(t) can modulate the speed of revolution of the extraction helix (4) according to the shape of the curve derived by the modulation detector (31).

2. A device according to Claim 1, **characterised in that** the angle measuring means include an incremental transmitter (8) joined to a suitable axle.

3. A device according to one of the claims 1 or 2, **characterised in that**

- an output (10) of the weighing machine (9) is connected indirectly via the mass flow controller (18) to the modulation detector (31),

- the characteristic signal for the mass flow ṁ(t) is a position signal s(t) at the output of the mass flow controller (18).

**4.** A device according to one of the claims 1 or 2, **characterised in that**

- an output (10) of the weighing machine (9) is connected directly to the modulation detector (31),
- the characteristic signal for the mass flow ṁ(t) is a signal at the output (10) of the weighing machine (9).

**5.** A device according to one of the claims 2 to 4, **characterised in that**

- a divider element (44) is present,
- the incremental transmitter (8) is connected to this divider element (44),
- this divider element (44) divides the frequency of a signal generated by the incremental transmitter (8) by a suitable number,
- the incremental transmitter (8) is connected indirectly via the divider element (44) to the modulation detector (31).

**6.** A device according to one of the claims 2 to 4, **characterised in that**

- a divider element (44) is present,
- the incremental transmitter (8) is connected to this divider element (44),
- this divider element (44) divides the frequency of a signal generated by the incremental transmitter (8) by a suitable number,
- the incremental transmitter (8) is connected indirectly via the divider element (44) to the rotational speed modulator (32).

**7.** A device according to one of the claims 1 to 6, **characterised in that**

- the modulation detector (31) includes, suitably connected amongst each other
- means (42) with which the periodic deviations from the average value of the mass flow m(t)
- from a target value can be determined
- means (47) for generating a sine and a cosine signal at the basic frequency $\underline{f}$,
- multiplication means (50, 51) with which the products of the mass flow m(t) and the sine signal, and of the mass flow m(t) and the cosine signal can be determined,
- means of integration (60, 61), with which the average values in each case of these products can be determined over time.

**8.** A device according to claim 7, **characterised in that** in the modulation detector (31)

- additional means are available for the generation of sine and cosine signals at a natural multiple of the basic frequency $\underline{f}$,
- additional means are available for the determination of the average values over time of the products of the mass flow m(t) and the these sine and cosine signals respectively.

**9.** A device according to one of the claims 1 to 6, **characterised in that**

- the rotational speed modulator (32) includes,

- suitably interconnected amongst each other means (67) for the generation of one sine and one cosine signal respectively at frequency $\underline{f}$
- multiplication means (70, 71) with which these sine and cosine signals respectively can be multiplied with the corresponding output signals from the modulation detector (31),
- addition means (76), with which these products can be added into a sum,

- the rotational speed modulator (32) has an output (79), at which essentially a modulation signal appears which corresponds to this above mentioned sum,
- this output (79) is connected with an input of the processing element (83).

**10.** A device according to claim 9, **characterised in that** in the rotational speed modulator (32)

- additional means are available for the generation of sine and cosine signals at a natural multiple of the basic frequency $\underline{f}$,
- additional means are available to determine average values over time of the products of the mass flow $\dot{m}(t)$ and these sine and cosine signals respectively.

**11.** A device according to claim 9, **characterised in that**

- a divider element (44) is available,
- the incremental transmitter (8) is connected to this divider element (44),
- this divider element (44) divides the frequency of a signal generated by the incremental transmitter (8) by a suitable number,
- a phase corrector element (84) is present,
- a processing element (85) with two inputs is available,
- the divider element (44) and the phase corrector element (84) are connected each to one input of this processing element (85),
- the output of the processing element (85) is connected to the rotational speed signal input (41) of the rotational speed modulator (32),

whereby the phase conditions of the angular functions generated by the angle function generator (67) of the rotational speed modulator (32) can be prescribed at will.

**12.** A device according to one of the claims 1 to 11, **characterised in that** an integrated analog circuit element is applied in the device for the performance of at least one of the mathematical operations.

**13.** A device according to one of the claims 1 to 11, **characterised in that** an integrated digital circuit element is applied in the device for the performance of at least one of the mathematical operations.

**14.** A device according to one of the claims 1 to 11, **characterised in that**

- a digital computer is present and suitably connected with the device,
- this digital computer is applied in the device for the performance of at least one of the mathematical operations.

**15.** A method for the operation of a device for controlling the dosing of the mass flow $\dot{m}(t)$ for a helical dosing equipment (1) with a supply container (2) for bulk material, an electric motor (6), an extraction helix (4) coupled to it, a weighing machine (9) which continuously measures the weight of the helical dosing equipment (1) together with the remaining bulk material contained in it with a mass flow controller (18) connected to an output (10) of the weighing machine (9) and a rotational speed regulator (25) connected to the motor (6), **characterised in that**

- the periodic deviations of the mass flow $\dot{m}(t)$ from a target value are continuously analysed by a modulation detector (31),
- an approximation function is calculated for these deviations,
- the rotational speed of the extraction helix (4), corresponding to the calculated approximation function, is modulated using a rotational speed modulator (32) such that the deviations of the mass flow $\dot{m}(t)$ are reduced to the unavoidable random deviations and the periodic deviations of the mass flow $\dot{m}(t)$ are eliminated.

**16.** A method according to Claim 15, **characterised in that**

- the mass flow $\dot{m}(t)$ is continuously determined using a sampling frequency, which is large compared to the basic frequency $\underline{f}$,
- the coefficients of at least the basic frequency f in the Fourier series of the mass flow $\dot{m}(t)$ are determined,
- these coefficients are intermittently calculated and from them an approximation function for the time dependent deviation of the mass flow $\dot{m}(t)$ from an average value is calculated,
- the speed of rotation of the extraction helix (4) is modulated in accordance with this approximation function.

**17.** A method in accordance with one of claims 15 or 16, **characterised in that** for the determination of the approximation function for the time dependent deviation of the mass flow $\dot{m}(t)$ from its target value the extreme values of the deviation of the mass flow $\dot{m}(t)$ are used.

**18.** A method in accordance with one of claims 15 to 17, **characterised in that** for the approximation function an overlay of at the most quadratic functions is used.

**19.** A method in accordance with Claim 15, **characterised in that**

- the periodic deviations of the mass flow $\dot{m}(t)$ from a target value with the basic frequency $\underline{f}$ are continuously analysed using a modulation detector (31),
- an approximation function is calculated for these deviations,
- at suitable intervals of time a calibration measurement is performed over at least a period of T,
- amplitudes of the periodic deviations of the mass flow $\dot{m}(t)$ from its target value with a higher frequency than the basic frequency $\underline{f}$ are determined from these calibration measurements,
- the speed of rotation of the extraction helix (4) corresponding to a combination of the calculated approximation function for the basic frequency $\underline{f}$ and the amplitudes of the deviations of higher frequency is modulated by a rotational speed modulator (32), so that the variations of the mass flow $\dot{m}(t)$ are reduced to the unavoidable random variations and the periodic deviations of the mass flow $\dot{m}(t)$ are eliminated.

**Revendications**

**1.** Dispositif servant à régler le dosage du débit massique m(t) pour un appareil de dosage à vis sans fin (1) avec un conteneur de réserve (2) pour un produit en vrac, un moteur électrique (6), une vis sans fin d'extraction (4) couplée à celui-ci, des moyens de mesure d'angle pour déterminer la position angulaire de la vis sans fin d'extraction (4), une balance (9), laquelle mesure en continu la masse de l'appareil de dosage à vis sans fin (1) ainsi que le produit en vrac contenu dedans, un régulateur de débit massique (18) relié à une sortie (10) de la balance (9) et un régulateur de vitesse de rotation (25) relié au moteur (6), **caractérisé en ce**

- **qu'**il y a un détecteur à modulation (31) et qui est relié à la sortie (10) de la balance (9) et avec les moyens de mesure d'angle, avec lequel les écarts périodiques d'un signal caractéristique pour le débit massique m(t) peuvent être mesurés quantitativement par une valeur théorique,
- **qu'**il y a un modulateur de vitesse de rotation (32) et qui est relié aux moyens de mesure d'angle et au détecteur à modulation (31) avec lequel un signal de modulation approprié peut être produit à partir des valeurs quantitatives trouvées par le détecteur à modulation (31),
- **qu'**il y a un organe de traitement (83) et qui est relié au modulateur de vitesse de rotation (32) et au régulateur de débit massique (18) avec lequel ce signal de modulation et le signal caractéristique pour le débit massique m(t) peut être traité en un signal de réglage $s_{mod}(t)$ modulé,
- **que** le régulateur de vitesse de rotation (25) est relié à une sortie de l'organe de traitement (83) et la vitesse de rotation de la vis sans fin d'extraction (4) peut être modulée avec ce signal de réglage ($s_{mod}(t)$ modulé selon la forme de courbe déterminée par le détecteur à modulation (31).

**2.** Dispositif selon la revendication 1, **caractérisé en ce que** les moyens de mesure d'angle contiennent un capteur de progression (8) relié à un axe approprié.

**3.** Dispositif selon l'une quelconque des revendications 1 ou 2, **caractérisé en ce**

- **qu'**une sortie (10) de la balance (9) est reliée indirectement par le biais du régulateur de débit massique (18) au détecteur à modulation (31),
- **que** le signal caractéristique pour le débit massique m(t) est un signal de réglage s(t) à la sortie du régulateur de débit massique (18).

**4.** Dispositif selon l'une quelconque des revendications 1 ou 2, **caractérisé en ce**

- **qu'**une sortie (10) de la balance (9) est reliée directement au détecteur à modulation (31),
- **que** le signal caractéristique pour le débit massique m(t) est un signal à la sortie (10) de la balance (9).

**5.** Dispositif selon l'une quelconque des revendications 2 à 4, **caractérisé en ce**

- **qu'**il y a un organe diviseur (44),
- **que** le capteur de progression (8) est relié à cet organe diviseur (44),

- **que** cet organe diviseur (44) divise la fréquence d'un signal produit par le capteur de progression (8) par un nombre approprié,
- **que** le capteur de progression (8) est relié indirectement par le biais de l'organe diviseur (44) au détecteur à modulation (31).

6. Dispositif selon l'une quelconque des revendications 2 à 4, **caractérisé en ce**

- **qu'**il y a un organe diviseur (44),
- **que** le capteur de progression (8) est relié à cet organe diviseur (44),
- **que** cet organe diviseur (44) divise la fréquence d'un signal produit par le capteur de progression (8) par un nombre approprié,
- **que** le capteur de progression (8) est indirectement relié par le biais de l'organe diviseur (44) au modulateur de vitesse de rotation (32).

7. Dispositif selon l'une quelconque des revendications 1 à 6, **caractérisé en ce que**

- le détecteur à modulation (31)
- contient des moyens (42) reliés entre eux de façon appropriée avec lesquels les écarts de moyenne périodiques du débit massique m(t) par rapport à une valeur théorique peuvent être déterminés,
- contient des moyens (47) pour produire respectivement un signal sinusoïdal et un signal cosinusoïdal de la fréquence de base f,
- contient des moyens de multiplication (50,51) avec lesquels les produits peuvent être déterminés à partir du débit massique m(t) et du signal sinusoïdal et à partir du débit massique m(t) et du signal cosinusoïdal,
- contient des moyens d'intégration (60,61) avec lesquels les moyennes de temps de ces produits peuvent être respectivement déterminées.

8. Dispositif selon la revendication 7, **caractérisé en ce que** dans le détecteur à modulation (31)

- il y a en plus des moyens pour produire des signaux sinusoïdaux et cosinusoïdaux avec un multiple naturel de la fréquence de base f,
- il y a en plus des moyens pour déterminer des moyennes de temps des produits à partir du débit massique m(t) et de ces signaux respectivement sinusoïdaux et cosinusoïdaux.

9. Dispositif selon l'une quelconque des revendications 1 à 6, **caractérisé en ce que**

- le modulateur de vitesse de rotation (32)
- contient des moyens (67) reliés entre eux de manière appropriée pour produire respectivement un signal sinusoïdal et un signal cosinusoïdal de la fréquence de base f,
- comporte des moyens de multiplication (70,71) avec lesquels ces signaux respectivement sinusoïdaux et cosinusoïdaux peuvent être multipliés avec les signaux de sortie correspondants du détecteur à modulation (31),
- comporte des moyens d'addition (76) avec lesquels ces produits peuvent être ajoutés à un total,
- le modulateur de vitesse de rotation (32) comporte une sortie (79) sur laquelle se trouve pour l'essentiel un signal de modulation lequel correspond à ce total cité ci-dessus,
- cette sortie (79) est reliée avec une entrée de l'organe de traitement (83).

10. Dispositif selon la revendication 9, **caractérisé en ce que** dans le modulateur de vitesse de rotation (32)

- il y a en plus des moyens pour produire des signaux sinusoïdaux et cosinusoïdaux avec un multiple naturel de la fréquence de base f,
- il y a en plus des moyens pour déterminer des moyennes de temps des produits à partir du débit massique m(t) et de ces signaux respectivement sinusoïdaux et cosinusoïdaux.

11. Dispositif selon la revendication 9, **caractérisé en ce**

- **qu'**il y a un organe diviseur (44),
- le capteur de progression (8) est relié avec cet organe diviseur (44),
- **que** cet organe diviseur (44) divise la fréquence d'un signal produit par le capteur de progression (8) par un nombre approprié,

- **qu'**il y a un organe de correction de phase (84),
- **qu'**il y a un organe de traitement (85) avec deux entrées,
- **que** l'organe diviseur (44) et l'organe de correction de phase (84) sont respectivement reliés à une entrée de cet organe de traitement (85),
- **que** la sortie de l'organe de traitement (85) est reliée à l'entrée du signal de vitesse de rotation (41) du modulateur de vitesse de rotation (32),

grâce à quoi les positions de phase des fonctions angulaires produites par le générateur de fonction angulaire (67) du modulateur de vitesse de rotation (32) peuvent être prédéfinies à volonté.

12. Dispositif selon l'une quelconque des revendications 1 à 11, **caractérisé en ce qu'**un élément de commutation analogique intégré est utilisé pour réaliser au moins une des opérations mathématiques dans le dispositif.

13. Dispositif selon l'une quelconque des revendications 1 à 11, **caractérisé en ce qu'**un élément de commutation numérique intégré est utilisé pour réaliser au moins une des opérations mathématiques dans le dispositif.

14. Dispositif selon l'une quelconque des revendications 1 à 11, **caractérisé en ce**

- **qu'**il y a un calculateur numérique et qui est relié de manière appropriée au dispositif,
- **que** ce calculateur numérique est utilisé pour réaliser au moins une des opérations mathématiques dans le dispositif.

15. Méthode servant à faire fonctionner un dispositif pour le dosage du débit massique m(t) pour un appareil de dosage à vis sans fin (1) avec un conteneur de réserve (2) pour du produit en vrac, un moteur électrique (6), une vis sans fin d'extraction (4) couplée à celui-ci, une balance (9), laquelle mesure en continu la masse de l'appareil de dosage à vis sans fin (1) ainsi que le produit en vrac contenu dedans, un régulateur de débit massique (18) relié à une sortie (10) de la balance (9) et un régulateur de vitesse de rotation (25) relié au moteur (6), **caractérisée en ce**

- **que** les écarts périodiques du débit massique m(t) par rapport à une valeur théorique sont analysés en continu avec un détecteur à modulation (31),
- **qu'**une fonction d'approximation est déterminée pour ces écarts,
- **que** la vitesse de la vis sans fin d'extraction (4) est modulée avec un modulateur de vitesse de rotation (32) selon la fonction d'approximation déterminée, de manière que les variations du débit massique m(t) sont réduites aux variations aléatoires inévitables et les variations périodiques du débit massique m(t) sont éliminées.

16. Méthode selon la revendication 15, **caractérisée en ce**

- **que** le débit massique m(t) est déterminé en continu avec une fréquence d'analyse qui est importante par rapport à la fréquence de base f,
- **que** les coefficients au moins de la fréquence de base f sont déterminés dans le développement de Fourier du débit massique m(t),
- **que** la moyenne de ces coefficients est déterminée dans le temps et qu'une fonction d'approximation est calculée à partir de celle-ci pour l'écart dans le temps du débit massique m(t) par rapport à une valeur moyenne,
- **que** la vitesse de rotation de la vis sans fin d'extraction (4) est modulée selon la valeur respective de cette fonction d'approximation.

17. Méthode selon l'une quelconque des revendications 15 ou 16, **caractérisée en ce que** les valeurs extrêmes de l'écart du débit massique m(t) par rapport à sa valeur théorique sont utilisées pour déterminer la fonction d'approximation pour l'écart dans le temps du débit massique m(t) par rapport à une valeur moyenne.

18. Méthode selon l'une quelconque des revendications 15 à 17, **caractérisée en ce qu'**une superposition des fonctions au maximum quadratiques est utilisée pour la fonction d'approximation.

19. Méthode selon la revendication 15, **caractérisée en ce**

- **que** les écarts périodiques du débit massique m(t) par rapport à une valeur théorique avec la fréquence de base f sont analysés en continu avec un détecteur à modulation (31),
- **qu'**une fonction d'approximation est déterminée pour ces écarts,

- **qu'**une mesure d'étalonnage sur au moins une période T est effectuée à des intervalles de temps appropriés,
- **que** des amplitudes des écarts périodiques du débit massique m(t) par rapport à une valeur théorique avec une fréquence plus élevée sont déterminées en tant que fréquence de base f à partir de cette mesure d'étalonnage,
- **que** la vitesse de rotation de la vis sans fin d'extraction (4) est modulée avec un modulateur de vitesse de rotation (32), selon une combinaison de la fonction d'approximation déterminée pour la fréquence de base f et des amplitudes pour les écarts de fréquence plus élevée, de manière que les variations du débit massique m(t) sont réduites aux variations aléatoires inévitables et les variations périodiques du débit massique m(t) sont éliminées.

Fig. 3

Fig. 1

Fig. 4

Fig. 5

Fig. 2

**Fig. 6**